(19) Europäisches Patentamt
European Patent Office
Office européen des brevets

(11) Veröffentlichungsnummer: **0 017 111**
**B1**

(12) # EUROPÄISCHE PATENTSCHRIFT

(45) Veröffentlichungstag der Patentschrift: **18.05.83**

(21) Anmeldenummer: **80101520.7**

(22) Anmeldetag: **22.03.80**

(51) Int. Cl.³: **C 08 J 3/08,** C 08 G 18/32, C 08 G 18/14 // (C08J3/08, C08G63/00, 69/44)

(54) **Dispersionen von hochschmelzenden Polyestern in Polyhydroxylverbindungen, Verfahren zu deren Herstellung und deren Verwendung bei der Herstellung von Polyurethankunststoffen.**

(30) Priorität: **04.04.79 DE 2913458**

(43) Veröffentlichungstag der Anmeldung:
**15.10.80 Patentblatt 80/21**

(45) Bekanntmachung des Hinweises auf die Patenterteilung:
**18.05.83 Patentblatt 83/20**

(84) Benannte Vertragsstaaten:
**AT BE DE FR GB IT NL SE**

(56) Entgegenhaltungen:
**EP-A-0 011 751**
**DE-A-2 538 116**
**DE-A-2 740 672**
**FR-A-2 284 638**
**GB-A-1 270 352**
**GB-A-1 352 284**

(73) Patentinhaber: **BAYER AG, Zentralbereich Patente, Marken und Lizenzen, D-5090 Leverkusen 1, Bayerwerk (DE)**

(72) Erfinder: **Mazanek, Jan, Dr., Jakob-Boehme-Strasse 13, D-5000 Köln 80 (DE)**
Erfinder: **Gipp, Roland, Dr., Jakob-Boehme-Strasse 2, D-5000 Köln 80 (DE)**
Erfinder: **Zöllner,Robert, Dr., Heinrich-von-Kleist-Strasse 10, D-5090 Leverkusen (DE)**
Erfinder: **Seifert, Peter, Dr., August-Kierspel-Strasse 161, D-5060 Bergisch Gladbach 2 (DE)**
Erfinder: **Wagner, Kuno, Dr., Am Kiesberg 8, D-5090 Leverkusen (DE)**
Erfinder: **Blahak, Johannes, Dr., c/o Metzeler Kautschuk AG, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 017 111 B1

# Dispersionen von hochschmelzenden Polyestern in Polyhydroxylverbindungen, Verfahren zu deren Herstellung und deren Verwendung bei der Herstellung von Polyurethankunststoffen

Die Erfindung betrifft neuartige, feinteilige, redispergierbare Dispersionen von hochschmelzenden Polyestern in niedrig schmelzenden Polyhydroxylverbindungen, ein Verfahren zur Herstellung dieser Dispersionen und die Verwendung der Dispersion als füllstoffhaltige Polyolkomponente bei der Herstellung von gegebenenfalls zellförmigen Polyurethankunststoffen.

Die Verwendung von füllstoffhaltigen höhermolekularen Polyhydroxylverbindungen bei der Herstellung von Polyurethankunststoffen gewinnt in den letzten Jahren zunehmende Bedeutung. Die Möglichkeit, die Eigenschaften von Polyurethankunststoffen durch organische oder anorganische Füllstoffe zu verbessern, führte zur Entwicklung einer Reihe von Polyhydroxylverbindungen, welche derartige Füllstoffe in feinverteilter Form eindispergiert enthalten. Zu den wichtigsten Vertretern dieser Stoffklasse gehören Dispersionen von Styrol/Acrylnitril-Copolymerisaten in höhermolekularen Polyolen (DE-AS 1 152 536, DE-PS 1 769 795; US-Patentschriften 3 110 695, 3 304 273, 3 383 351, 3 523 093 und 3 637 909), Dispersionen von Polyisocyanat-Polyadditionsprodukten, insbesondere Polyhydrazodicarbonamiden (DE-Auslegeschriften 1 168 075 und 1 260 142; DE-Offenlegungsschriften 2 512 385, 2 513 815, 2 550 796, 2 550 797, 2 550 833, 2 550 862, 2 633 293 und 2 639 254), von Aminoplastkunststoffen (DE-Offenlegungsschriften 2 324 134 und 2 423 984) bzw. anorganischen Verbindungen wie Kreide oder Bariumsulfat in Polyhydroxylverbindungen (DE-Offenlegungsschriften 2 654 746, 2 714 291 und 2 739 620).

Organische Füllstoffe enthaltende Dispersionen der obengenannten Art werden in allen Fällen durch direkte Herstellung der dispersen Phase in der Polyhydroxylverbindung gewonnen. Diese Dispersionen sind zwar im allgemeinen über längere Zeiträume hinweg stabil, haben jedoch den Nachteil eines erhöhten Produktionsrisikos. Wenn die Dispersionen durch einen äusseren Anlass, z.B. infolge Anwendung zu hoher Temperaturen, sedimentieren, dann können sie in der Regel nicht mehr neu dispergiert werden. Diese Erscheinung ist auch von besonderer Bedeutung für Fehlchargen bei der industriellen Produktion.

Die in der Praxis derzeit am meisten verwendeten Dispersionen von Styrol/Acrylnitril-Copolymerisaten haben darüber hinaus den Nachteil, dass vor ihrer Verwendung die noch vorhandenen Restmonomeren aus toxikologischen Gründen quantitativ entfernt werden müssen. Der Hauptnachteil von anorganischen Füllstoffdispersionen liegt in ihrer im allgemeinen schlechten Lagerstabilität.

Es wurde nunmehr überraschenderweise gefunden, dass man sehr feinteilige, sedimentationsstabile, reversibel dispergierbare organische Füllstoffdispersionen in Polyhydroxylverbindungen in einfacher Weise durch Schmelzdispergieren von hochschmelzenden Polyestern in niedrig schmelzenden höhermolekularen Polyhydroxylverbindungen erhält. Es ist auch als überraschend anzusehen, dass sich derartige Dispersionen auch ohne jeglichen Zusatz von Emulgatoren herstellen lassen. Dies ist für den Fachmann deshalb unerwartet, da im allgemeinen sedimentationsstabile Feststoffdispersionen ohne Anwendung von Emulgatoren nicht herstellbar sind. Nach den obengenannten Verfahren des Standes der Technik werden lagerstabile Füllstoffdispersionen immer nur dann erhalten, wenn entweder dem System gleichzeitig Emulgatoren zugesetzt oder in situ während der Herstellung der Dispersionen in der Polyhydroxylverbindung gebildet werden.

Gegenstand der Erfindung ist ein Verfahren zur Herstellung von feinteiligen, redispergierbaren Dispersionen von organischen Füllstoffen in niedrig schmelzenden Polyhydroxylverbindungen, dadurch gekennzeichnet, dass man

a) 1–40 Gew.-%, bezogen auf die gesamte Dispersion, eines Polyesters, Polyesteramids oder segmentierten Copolyetheresters mit einem Schmelzpunkt zwischen 110 und 280 °C und Molekulargewichten zwischen 254 und 50 000, und

b) 99–60 Gew.-%, bezogen auf die gesamte Dispersion, einer Polyhydroxylverbindung mit einem Schmelzpunkt unter 50 °C, in welcher die dispergierte Komponente a) im wesentlichen unlöslich ist, bei einer Temperatur oberhalb des Schmelzpunktes von Komponente a) unter starkem Rühren intensiv miteinander vermischt und das Gemisch unter weiterem intensivem Rühren unter den Schmelzpunkt von Komponente a) abkühlt, oder dass man die Komponente a) in einem Lösungsmittel löst und, gegebenenfalls portionenweise, mit der – gegebenenfalls in einem Lösungsmittel gelösten – Komponente b) gut vermischt und gleichzeitig und/oder anschliessend das bzw. die Lösungsmittel unter starkem Rühren, gegebenenfalls im Vakuum abdestilliert, wobei mehr als 50 Gew.-% der dispergierten Phase a) in einer Teilchengrösse von 0,5 bis 10 µm in der kontinuierlichen Phase b) vorliegen.

Gegenstand der Erfindung sind auch nach dem obengenannten Schmelz- oder Lösungsmittel-Dispergierverfahren hergestellte Dispersionen von

a) 1 bis 40 Gew.-%, vorzugsweise 5 bis 25 Gew.-%, bezogen auf die gesamte Dispersion, eines Polyesters, Polyesteramids oder segmentierten Copolyetheresters mit einem Schmelzpunkt zwischen 110 und 280 °C, vorzugsweise zwischen 110 und 220 °C, mit vorzugsweise durchschnittlich 2 bis 4 Hydroxylgruppen, die gegebenenfalls ganz oder teilweise durch Reaktion mit Isocyanaten oder ähnlichen Verbindungen verschlossen sind und mit einem Molekulargewicht von 254 bis 50 000, insbesondere 300 bis 25 000, als disperser Phase in

b) 99 bis 60 Gew.-%, vorzugsweise 95 bis 75 Gew.-%, bezogen auf die gesamte Dispersion, einer Polyhydroxylverbindung mit einem Schmelzpunkt unter 50 °C, vorzugsweise unter 20 °C, in welcher die dispergierte Komponente a) im wesentlichen unlöslich ist, als kontinuierlicher Phase, wobei mehr als 50 Gew.-%, vorzugsweise mehr als 75 Gew.-%, der dispergierten Phase in einer Teilchengrösse von 0,05 bis 10 µm vorzugsweise 0,1 bis 4 µm, besonders bevorzugt 0,2 bis 2 µm vorliegen.

Gegenstand der Erfindung ist schliesslich auch die Verwendung der Dispersionen bei der Herstellung von gegebenenfalls zellförmigen Polyurethankunststoffen durch Umsetzung von

A) Polyisocyanaten mit

B) organische Füllstoffe enthaltenden höhermolekularen Polyhydroxylverbindungen sowie gegebenenfalls

C) weiteren gegenüber Isocyanaten reaktionsfähige Gruppen aufweisenden Verbindungen, gegebenenfalls in Gegenwart von

D) Treibmitteln, Aktivatoren und sonstigen an sich bekannten Zusatzstoffen, welches dadurch gekennzeichnet ist, dass man als Komponente B) die erfindungsgemässen Dispersionen einsetzt und dass die Temperatur des Reaktionsansatzes aus den Komponenten unterhalb der Schmelztemperatur des in Komponente B) dispergierten organischen Füllstoffs gehalten wird.

Aus der Literatur sind bereits einige Verfahren zur Herstellung von Polyurethankunststoffen bekanntgeworden, bei welchen neben den üblicherweise eingesetzten niedrigschmelzenden höhermolekularen Polyhydroxylverbindungen auch hochschmelzende Polyester, Copolyetherester oder Polyesteramide mitverwendet werden können. Beispiele hierfür sind die DE-OS 2 706 297 und die GB-Patentschriften 848 837 und 848 980. Bei diesen Verfahren des Standes der Technik wird jedoch – im Gegensatz zur vorliegenden Erfindung – die hochschmelzende Polyesterkomponente chemisch vollständig in das Polyurethan eingebaut, indem man die Reaktion oberhalb des Schmelzpunktes dieser Komponente ablaufen lässt. Im Gegensatz zur vorliegenden Erfindung ist also bei den Verfahrensprodukten des Standes der Technik die hochschmelzende Komponente im ausgehärteten Polyurethankunststoff nicht mehr als feinverteilter Füllstoff enthalten.

In der prioritätsälteren, nachveröffentlichten europäischen Anmeldung 11 751 werden Verfahren zur Herstellung von verstärkten, geschäumten Polyurethanen unter Verwendung von Dispersionen von organischen und/oder anorganischen Füllstoffen, die durch in-situ-Zerkleinerung der festen Füllstoffe mit hoher örtlicher Energiedichte (Nassmahlung) zu einer Teilchengrösse unter 7 mm in Polyisocyanaten oder Polyolen hergestellt wurden, beschrieben.

Als organische Füllstoffe werden dabei organische Materialien eingesetzt, die in dem Dispergiermedium nicht oder höchstens schwach quellbar und genügend spröde sind, um unter den technischen Bedingungen der Nassmahlung in wirtschaftlichen Zeiten auf die erforderliche Teilchengrösse zerkleinert werden zu können. Beispielhaft werden Sprödharze wie sie als Bindemittel für die Druckindustrie bekannt sind, genannt, z. B. solche auf Basis Melamin oder Phenol und Formaldehyd, Polymerisate und Kondensate, Ketonharze, ferner spröde, z. B. vernetzte, Polyurethane und Polyester, vorzugsweise vernetzte Polyester auf Basis von di- oder höherfunktionellen Carbonsäuren mit di- oder höherfunktionellen Alkoholen.

Das erfindungsgemässe Verfahren vermeidet demgegenüber das technisch aufwendige Nassmahlverfahren und stellt ein einfaches Schmelzdispergierverfahren (oder weniger bevorzugt ein Lösungsmittel-Verfahren) zur Verfügung, wonach auch nicht-spröde Materialien feinteilig dispergiert werden können.

Als disperse Phase der erfindungsgemässen Dispersionen kommen z. B. beliebige, an sich bekannte Polyesterpolyole mit einem Schmelzpunkt zwischen 110 und 280 °C, bevorzugt 110 bis 220 °C, in Frage, deren Molekulargewicht zwischen 254 und 50 000, vorzugsweise zwischen 300 und 25 000 liegt.

Derartige hochschmelzende Polyester werden im allgemeinen dann erhalten, wenn entweder die bei ihrer Herstellung verwendete Säurekomponente oder die Diolkomponente (oder anteilweise beide) aromatische oder cycloaliphatische Gruppen enthalten. Säuren dieser Art sind z. B. Terephthalsäure, Isophthalsäure, Naphthylen-1,5- und 2,6-dicarbonsäure bzw. die entsprechenden am Kern chlorierten und/oder hydrierten Dicarbonsäuren. Geeignete aromatische bzw. cycloaliphatische Diole sind z. B. Hydantoine wie

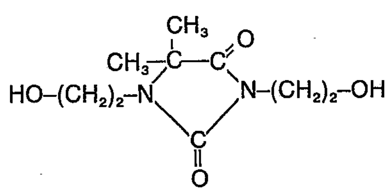

N,N′-Bis-(hydroxyalkyl)-benzimidazolone, z. B.

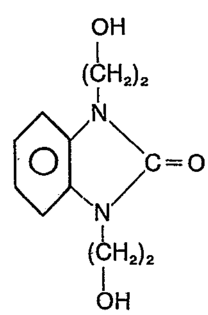

Cyclohexandimethanol, Bis-(hydroxymethyl)-hydrochinon, 1,4-Phenylen-bis-(β-hydroxyäthyläther) und die isomeren Dihydroxycyclohexane. Neben diesen cycloaliphatischen bzw. aromatischen Ausgangskomponenten können bei der Herstellung der hochschmelzenden Polyester selbstverständlich auch die weiter unten ausführlich beschriebenen aliphatischen Polyole und Polycarbonsäuren verwendet werden. Ein geeignetes hochschmelzendes Polylacton ist z.B. das Pivalolactondiol. Erfindungsgemäss bevorzugt sind jedoch als hochschmelzende dispergierte Komponente Polyester auf der Basis von Terephthalsäure und 1,4-Butandiol und/oder Hexandiol und/oder Äthylenglykol.

Zur Regulierung des Molekulargewichts bzw. der mittleren Funktionalität der hochschmelzenden Polyester können bei deren Herstellung gegebenenfalls auch monofunktionelle bzw. mehr als difunktionelle Hydroxylverbindungen oder Carbonsäuren verwendet werden; besonders bevorzugt sind allerdings hochschmelzende Polyester, welche aus Diolen und Dicarbonsäuren aufgebaut sind.

Erfindungsgemäss geeignete hochschmelzende Polyesteramide werden in an sich bekannter Weise erhalten, wenn man bei der Kondensation von Carbonsäuren bzw. deren Anhydriden mit Polyolen Aminoalkohole, Diamine oder Polyamine mitverwendet.

Ausser den oben erwähnten Polyestern können zur Herstellung der erfindungsgemässen Dispersionen auch hochschmelzende, segmentierte Copolyetherester verwendet werden, die in ihrer Molekülstruktur hochschmelzende Polyestersegmente aufweisen, welche durch Ether- oder Polyetherbrücken miteinander verbunden sind. Derartige Copolyetherester können nach an sich bekannten Verfahren hergestellt werden, beispielsweise durch Schmelzkondensation von Polyalkylenterephthalaten mit höhermolekularen, Ethergruppen tragenden Polyestern gemäss den DE-Offenlegungsschriften 2 360 287 (US-PS 3 963 800), 2 412 727 und 2 458 472. Eine andere Variante besteht darin, ein hochschmelzendes Polyesterpolyol mit einem Polyetherpolyol in Gegenwart eines Veretherungskatalysators zu kondensieren. Ein hierfür geeignetes Verfahren wird z.B. in der DE-OS 2 210 839 (US-PS 3 849 515) beschrieben. Gemäss einer weiteren Verfahrensvariante, die ebenfalls in den obengenannten deutschen Offenlegungsschriften bzw. auch in der DE-OS 2 706 297 erläutert wird, kann man auch ein hochschmelzendes Polyesterpolyol auf Basis einer aromatischen Polycarbonsäure in einem Eintopfverfahren in Gegenwart üblicher Umesterungskatalysatoren in einem Polyetherpolyol in situ herstellen und dann thermisch durch Umesterung unter Glykolabspaltung an die Polyethersegmente ankoppeln.

Als kontinuierliche Phase der erfindungsgemässen Dispersionen kommen Polyhydroxylverbindungen mit einem Molekulargewicht von 62 bis etwa 12 000, vorzugsweise 400 bis 10 000, besonders bevorzugt 400 bis 6000, in Frage, welche einen Schmelzpunkt unterhalb von 50 °C, vorzugsweise unterhalb von 20 °C aufweisen. Es sind dies insbesondere 2 bis 8, vorzugsweise 2 bis 4, besonders bevorzugt 2 Hydroxylgruppen aufweisende Polyester, Polyether, Polythioether, Polyacetale und Polycarbonate, wie sie für die Herstellung von homogenen und von zellförmigen Polyurethanen an sich bekannt sind.

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-(hydroxymethyl)-cyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

d) Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

f) Auch bereits Urethan- oder Harnstoffgruppen enthaltende Polyhydroxylverbindungen sowie gegebenenfalls modifizierte natürliche Polyole, wie Rizinusöl, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Gegebenenfalls können erfindungsgemäss – wenn dies auch weniger bevorzugt ist – auch solche Polyole als kontinuierliche Phase eingesetzt werden, welche konventionelle organische und/oder anorganische Füllstoffe enthalten. Derartige modifizierte Polyhydroxylverbindungen werden z. B. in an sich bekannter Weise erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden Verbindungen ablaufen lässt. Derartige Verfahren sind beispielsweise in den DE-Auslegeschriften 1 168 075 und 1 260 142 sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyäthern (US-Patentschriften 3 383 351, 3 304 273, 3 523 093, 3 110 695; DE-Auslegeschriften 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyätherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Vertreter der genannten erfindungsgemäss zu verwendenden Verbindungen sind z. B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z. B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z. B. Mischungen von Polyäthern und Polyestern, eingesetzt werden.

Bei der Auswahl der Ausgangsverbindungen für alle diese erfindungsgemäss als kontinuierliche Phase der Dispersion geeigneten Polyole ist jedoch darauf zu achten, dass das Polyol den oben erwähnten niedrigen Schmelzpunkt aufweist.

Erfindungsgemäss kommen als kontinuierliche Phase der Dispersionen jedoch auch Polyole mit einem Molekulargewicht von 62 bis 400 in Betracht. Auch in diesem Fall können Mischungen von verschiedenen Verbindungen mit mindestens 2 Hydroxylgruppen bzw. auch Gemische dieser niedermolekularen Verbindungen mit den obengenannten höhermolekularen Polyolen verwendet werden. Als Beispiele für geeignete niedermolekulare Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethylcyclohexan, 2-Methyl-1,3-propandiol, Dibrombutendiol (US-Patentschrift

3 723 392), Glyzerin, Trimethylolpropan, Hexantriol-(1,2,6), Trimethyloläthan, Pentaerythrit, Ricinusöl, Diethylenglykol, Triethylenglykol, Tetraäthylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, Diethanolamin, N-Methyl-diethanolamin und Triethanolamin.

Als niedermolekulare Polyole kommen erfindungsgemäss auch die Gemische von Hydroxyaldehyden und Hydroxyketonen («Formose»), bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Die erfindungsgemässen Dispersionen werden vorzugsweise nach dem Schmelzdispergierverfahren hergestellt. Für die diskontinuierliche Herstellung der Dispersionen eignet sich dabei insbesondere eine Verfahrensvariante, bei welcher die hochschmelzende Komponente mit dem niedrigschmelzenden Polyol gemeinsam aufgeschmolzen und unter Einwirkung starker Scherkräfte intensiv vermischt wird. Anschliessend wird entweder der gesamte Ansatz unter weiterem starken Rühren abgekühlt, oder aber man lässt das gut durchgerührte Gemisch durch eine gekühlte, mit einem leistungsfähigen Rührer versehene Kammer laufen. Diese letztere Variante stellt bereits einen Übergang von der diskontinuierlichen zur kontinuierlichen Arbeitsweise dar. Man kann jedoch auch so verfahren, dass man die hochschmelzende und die niedrigschmelzende Komponente kontinuierlich in einen geheizten Reaktor einbringt, dort intensiv durchmischt und an einer anderen Stelle des Reaktors kontinuierlich Gemisch entnimmt und anschliessend wie oben beschrieben unter starkem Rühren abkühlt.

Die kontinuierliche Herstellung der erfindungsgemässen Dispersionen kann auch so erfolgen, dass man die aufgeschmolzene hochschmelzende Komponente direkt in einen kalten oder auch vorgeheizten Strom der niedrigschmelzenden Komponente unter starkem Rühren (z.B. in einem Stachelrührer) zudosiert und das Gemisch anschliessend abkühlt. Durch Variation der Dosier- und Abkühlgeschwindigkeit sowie der Verweilzeit des Gemisches in den Misch- bzw. Kühlkammern kann der Fachmann für eine gegebene Kombination von Ausgangskomponenten schnell die optimalen Herstellungsbedingungen feststellen.

Für die Herstellung der erfindungsgemässen Dispersionen weniger bevorzugt ist das Lösungsmittelverfahren, bei welchem die zu dispergierende hochschmelzende Komponente zuerst in einem Lösungsmittel gelöst wird. Diese Lösung wird dann mit der – gegebenenfalls ebenfalls in einem Lösungsmittel gelösten – niedrigschmelzenden Polyhydroxylverbindung (gegebenenfalls portionsweise) gut vermischt; gleichzeitig oder anschliessend destilliert man das bzw. die Lösungsmittel unter starkem Rühren, gegebenenfalls im Vakuum ab. Auch dieses Verfahren lässt sich sowohl diskontinuierlich als auch kontinuierlich ausgestalten. Das Lösungsmittelverfahren empfiehlt sich insbesondere dann, wenn die hochschmelzende Komponente einen so hohen Schmelzpunkt aufweist, dass bei Schmelzdispergierverfahren bereits mit einer thermischen Zersetzung einer der Komponenten gerechnet werden muss. Geeignete Lösungsmittel sind z.B. Dioxan, DMF und Acetonitril.

Es ist möglich, aber nicht erforderlich, den erfindungsgemässen Dispersionen bei ihrer Herstellung an sich bekannte Dispergiermittel bzw. Emulgatoren zuzusetzen; ein besonderes Merkmal der vorliegenden Erfindung ist jedoch, wie bereits oben erwähnt wurde, dass die erfindungsgemässen Dispersionen auch ohne Mitverwendung solcher Hilfsmittel ausreichend stabil sind.

Die erfindungsgemässen Dispersionen stellen wertvolle Ausgangsmaterialien für die Herstellung von Polyurethankunststoffen, insbesondere Polyurethanschaumstoffen dar. Ihr Hauptvorteil liegt in einer wesentlichen Erhöhung von Stauchhärte und Wärmestandfestigkeit der Schaumstoffe. Vorzugsweise werden erfindungsgemäss für die Herstellung von Polyurethankunststoffen solche Dispersionen eingesetzt, bei welchen die dispergierte Komponente (vorzugsweise ein Polyalkylenterephthalat) noch freie Hydroxylgruppen aufweist, so dass die Füllstoffpartikel durch Reaktion der an ihrer Oberfläche vorhandenen freien Hydroxylgruppen im Polyisocyanat-Polyadditionsverfahren mit der Polyurethanmatrix zum Teil chemisch verknüpft sind. Prinzipiell ist es jedoch auch möglich, solche Dispersionen einzusetzen, bei denen die freien Hydroxylgruppen der hochschmelzenden dispergierten Komponente (gegebenenfalls auch nur an der Oberfläche der Partikel) z.B. durch Reaktion mit Monocarbonsäuren, Monoisocyanaten oder ähnlichen Verbindungen abreagiert worden sind.

Bei der erfindungsgemässen Herstellung von Polyurethankunststoffen werden als Isocyanatkomponente die an sich bekannten aliphatischen, cycloaliphatischen, araliphatischen, aromatischen und heterocyclischen Polyisocyanate eingesetzt, wie sie z.B. von W. Siefken in Justus Liebigs Annalen der Chemie, 562, Seiten 75 bis

136, beschrieben werden, beispielsweise solche der Formel

$$Q\ (NCO)_n$$

in der

n = 2–4, vorzugsweise 2, und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4′- und/oder -4,4′-diphenyl-methan-diisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, Naphthylen-1,5-diisocyanat.

Ferner kommen beispielsweise erfindungsgemäss in Frage: Triphenylmethan-4,4′,4″-triisocyanat, Polyphenyl-polymethylenpolyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanate die sich vom 2,4- und/oder 2,6-Toluylendiisocyanat bzw. vom 4,4′- und/oder 2,4′-Diphenylmethandiisocyanat ableiten.

Neben den erfindungswesentlichen Dispersionen können bei der Herstellung von Polyurethankunststoffen gegebenenfalls auch weitere an sich bekannte Verbindungen mit gegenüber Isocyanaten reaktiven Gruppen mitverwendet werden. Es sind dies z.B. die bereits oben beschriebenen niedermolekularen und höhermolekularen Polyhydroxylverbindungen, insbesondere jedoch aliphatische oder aromatische Diamine als Kettenverlängerungsmittel.

Erfindungsgemäss geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4′- und 4,4′-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N′-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. β-Aminoäthylsemicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Bei der erfindungsgemässen Herstellung von Polyurethankunststoffen gegebenenfalls mitzuverwendende Hilfs- und Zusatzmittel sind beispielsweise:

a) Wasser und/oder leicht flüchtige anorganische oder organische Substanzen als Treibmittel. Als organische Treibmittel kommen z.B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453–455 und 507 bis 510 beschrieben.

b) Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)alkyläther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäss den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäss DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid,

Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 286, 2 062 289, 2 117 576 (US-Patentschrift 3 758 444), 2 129 198, 2 330 175 und 2 330 211 beschrieben.

Erfindungsgemäss können auch organische Metallverbindungen, insbesondere organische Zinnverbindungen, als Katalysatoren verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusölsulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, in Frage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-(chlorethyl)-phosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungsund Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemässen Verfahrens: Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäss die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den US-Patentschriften 3 178 490 und 3 182 104 bekannt.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden, wie sie z.B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).
Selbstverständlich können aber auch Schaumstoffe durch Blockverschäumung oder nach dem an sich bekannten Doppeltransportbandverfahren hergestellt werden.

Erfindungswesentlich ist, wie bereits oben erläutert wurde, dass die Reaktionstemperatur während der Polyisocyanat-Polyadditionsreaktion unterhalb des Schmelzpunkts der in den erfindungsgemässen Dispersionen enthaltenen hochschmelzenden Komponente liegt (vorzugsweise mehr als 10 °C), damit diese nicht vollständig in das Polyurethanmolekül eingebaut wird, sondern im fertigen Polyurethan als Füllstoffpartikel vorliegt.
Die erfindungsgemäss erhältlichen Polyurethanschaumstoffe werden z.B. als Poistermaterial im Automobil- oder Möbelsektor verwendet.

Die erfindungsgemässen Dispersionen eignen sich jedoch auch zur Herstellung von homogenen Polyurethanelastomeren nach allen an sich bekannten Verfahren, wobei das Präpolymerverfahren besonders bevorzugt ist. Auch in diesem Fall werden Produkte mit hervorragenden physikalischen Eigenschaften erhalten, die sich gegenüber jenen des Standes der Technik insbesondere durch verbesserte Zug- und Strukturfestigkeit auszeichnen. Die Verwendung der erfindungsgemässen Dispersionen bei der Herstellung von Polyurethankunststoffen führt also in jedem Falle zu Produkten mit gegenüber dem Stand der Technik verbessertem Eigenschaftsniveau. Ein wesentlicher Vorteil der erfindungsgemässen Dispersionen liegt jedoch auch darin, dass sie reversibel herstellbar sind, d.h. dass sie auch im Falle einer Fehlcharge oder aber im Falle einer durch äussere Umstände (wie z.B. starke Temperaturerhöhung) bedingten Sedimentation wieder reversibel redispergierbar sind. Das Redispergieren lässt sich mehrere Male wiederholen, ohne dass die Eigenschaften der aus der Dispersion hergestellten Polyurethankunststoffe nachteilig beeinflusst werden.

Die nachfolgenden Beispiele erläutern das erfindungsgemässe Verfahren; wenn nicht anders vermerkt, sind Mengenangaben als Gew.-Teile bzw. Gew.-% zu verstehen.

Beispiel 1

a) Herstellung der Dispersion
150 g eines Polyhexamethylenterephthalates mit einem mittleren Molekulargewicht von 675 (m.p.: 120 °C) und 1350 g eines trifunktionellen Polyethers aus Propylenoxid und Ethylenoxid (Molekulargewicht 3000) wurden unter Stickstoffatmosphäre auf 165 °C erwärmt. Nachdem der Polyester geschmolzen war, wurde das Gemisch unter starkem Rühren auf Raumtemperatur abgekühlt. Es entstand eine feinteilige Dispersion mit einer OH-Zahl von 47,2 (mittlere Teilchengrösse: 0,8 µm; 75% zwischen 0,1 und 1,2 µm.

b) Herstellung eines Polyurethanschaumes
89 g der obigen Dispersion werden mit 4,8 g Wasser, 2,5 g einer 30%igen Lösung von Endoethylenpiperazin in Diethylenglykol, 0,5 g Bis-(dimethylaminopropyl)-formamid und 1,5 g eines handelsüblichen Silikon-Schaumstabilisators intensiv verrührt. Anschliessend werden 82 g eines handelsüblichen technischen Polyisocyanats auf der Basis von 4,4'-Diisocyanatodiphenylmethan zugegeben; das Reaktionsgemisch wird gut durchgerührt und in einer offenen Form verschäumt. Der erhaltene Schaum besitzt folgende physikalische Eigenschaften:

| | | |
|---|---|---|
| Rohdichte: | 31 kg/m³ | (DIN 53 577) |
| Zugfestigkeit: | 180 KPa | (DIN 53 571) |
| Dehnung: | 67% | (DIN 53 571) |

Druckspannung (DIN 53 577)
bei 10% Verformung 3,9 KPa
bei 20% Verformung 5,1 KPa
bei 30% Verformung 6,8 KPa
bei 40% Verformung 9,5 KPa

c) Vergleichsversuch
Ein Schaum, der unter gleichen Bedingungen (gleiche Isocyanat-Kennzahl) aus denselben Ausgangskomponenten, aber unter Verzicht auf das dispergierte Polyhexamethylenterephthalat hergestellt wurde, besitzt folgende physikalischen Eigenschaften:

| | | |
|---|---|---|
| Rohdichte: | 35 kg/m³ | (DIN 53 577) |
| Zugfestigkeit: | 101 KPa | (DIN 53 571) |
| Dehnung: | 120% | (DIN 53 571) |

Druckspannung (DIN 53 577)
bei 10% Verformung 2,3 KPa
bei 20% Verformung 2,7 KPa
bei 30% Verformung 3,1 KPa
bei 40% Verformung 3,8 KPa

Beispiel 2

Es wurde verfahren wie im Beispiel 1 beschrieben, jedoch wurde ein Polyhexamethylenterephthalat mit mittlerem Molgewicht von 675 verwendet, dessen endständige Hydroxylgruppen mit Stearylisocyanat blockiert worden waren (m.p.: 108 °C). Der erhaltene Schaum besitzt folgende Eigenschaften:

| | | |
|---|---|---|
| Rohdichte: | 34 kg/m³ | (DIN 53 577) |
| Zugfestigkeit: | 114 KPa | (DIN 53 571) |
| Dehnung: | 85% | (DIN 53 571) |

Druckspannung (DIN 53 577)
bei 10% Verformung 2,4 KPa
bei 20% Verformung 3,2 KPa
bei 30% Verformung 4,2 KPa
bei 40% Verformung 5,7 KPa

Beispiel 3

Es wurde wie im Beispiel 1 verfahren, nur wurde anstelle der dort beschriebenen Dispersion eine Dispersion verwendet, die als dispergierte Phase 13 Gew.-% eines Polyhexamethylenterephthalats vom Molekulargewicht 672 (m.p.: 120 °C) und 6,5 Gew.-% eines Styrol/Acrylnitril-Copolymerisats enthielt. Der erhaltene Schaum besitzt folgende Eigenschaften:

| | | |
|---|---|---|
| Rohdichte: | 32 kg/m³ | (DIN 53 577) |
| Zugfestigkeit: | 185 KPa | (DIN 53 571) |
| Dehnung: | 55% | (DIN 53 571) |

Druckspannung (DIN 53 577)
bei 10% Verformung 4,6 KPa
bei 20% Verformung 6,3 KPa
bei 30% Verformung 8,6 KPa
bei 40% Verformung 12,1 KPa

Beispiel 4

Es wurde wie im Beispiel 1 bis zum Schmelzen des Polyesters erwärmt, nur wurde als dispergierte Phase Polybutylenterephthalat vom mittleren Molekulargewicht 1030 (Schmelzpunkt: 198 °C) verwendet. Der erhaltene Schaum besitzt folgende Eigenschaften:

| | | |
|---|---|---|
| Rohdichte: | 33 kg/m³ | (DIN 53 577) |
| Zugfestigkeit: | 195 KPa | (DIN 53 571) |
| Dehnung: | 60% | (DIN 53 571) |

Druckspannung: (DIN 53 577)
bei 10% Verformung 4,8 KPa
bei 20% Verformung 6,8 KPa
bei 30% Verformung 9,3 KPa
bei 40% Verformung 13,3 KPa

Beispiel 5

Es wurde wie im Beispiel 1 verfahren, nur bestand die dispergierte Phase aus Polyhexamethylenterephthalat vom mittleren Molekulargewicht 2490 (Schmelzpunkt 137 °C). Der erhaltene Schaum besitzt folgende Eigenschaften:

| | | |
|---|---|---|
| Rohdichte: | 32 kg/m³ | (DIN 53 577) |
| Zugfestigkeit: | 197 KPa | (DIN 53 571) |
| Dehnung: | 55% | (DIN 53 571) |

Druckspannung (DIN 53 577)
bei 10% Verformung 4,3 KPa
bei 20% Verformung 5,8 KPa
bei 30% Verformung 7,6 KPa
bei 40% Verformung 10,8 KPa

Beispiel 6

a) Herstellung der Dispersion

Aus 135 g Polytetramethylenterephthalat mit einem mittleren Molgewicht von 650 (m.p.: 176 °C) und 1190 g Polypropylenglykol vom mittleren Molgewicht 1000 wird analog zu Beispiel 1a) durch Erwärmen auf 195 °C und Abkühlen unter Rühren eine Dispersion hergestellt. (Teilchengrösse: 75% zwischen 0,1 und 1,4 µm).

b) Herstellung eines Polyurethanelastomers

132 g der obigen Dispersion werden bei 130 °C mit 47 g Toluylendiisocyanat (80% 2,4-, 20% 2,6-Isomeres) vermischt. Nach Abkühlen auf 120 °C wird 30 Minuten unter Stickstoffatmosphäre gerührt. Anschliessend werden 27,7 g 3,5-Diamino-4-chlorbenzoesäureisobutylester zugegeben, 20 Sekunden gerührt, das Reaktionsgemisch auf eine auf 90 °C vorgeheizte Platte gegossen und 24 Stunden bei 90 °C ausgehärtet. Das erhaltene Elastomer besitzt folgende Eigenschaften:

| | | |
|---|---|---|
| δ100 | 11,2 MPa | (DIN 53 504) |
| Zugfestigkeit | 21,3 MPa | (DIN 53 504) |
| Strukturfestigkeit | 617 N | (DIN 53 504) |
| Härte | 95 ShA | (DIN 53 505) |

Ein analoges Elastomer, das aus dem nichtmodifizierten Polyäther hergestellt wurde, besitzt folgende Eigenschaften:

| | | |
|---|---|---|
| δ100 | 6,7 MPa | (DIN 53 504) |
| Zugfestigkeit | 9,5 MPa | (DIN 53 504) |
| Strukturfestigkeit | 285 N | (DIN 53 504) |
| Härte (Shore A) | 85 | (DIN 53 505) |

Beispiel 7

a) Herstellung einer Dispersion

Aus 75 Teilen eines auf Trimethylolpropan gestarteten Mischpolyethers aus Propylenoxid und Ethylenoxid (OH-Zahl: 45), 20 Teilen eines auf Trimethylolpropan gestarteten Mischpolyethers aus Propylenoxid und Ethylenoxid (OH-Zahl: 35) und 5 Teilen eines Polyhexamethylenterephthalats vom mittleren Molekulargewicht 849 (Schmelzpunkt: 125 °C) wird nach der allgemeinen Arbeitsweise von Beispiel 1a) eine Dispersion mit einer mittleren Teilchengrösse von 0,8 µm hergestellt.

b) Herstellung eines Polyurethan-Weichschaums

100 Teile der obigen Dispersion werden mit 48,1 Teilen Diisocyanatotoluol (2,4-/2,6-Isomerenverhältnis: 72 zu 28), 1,0 Teilen eines handelsüblichen Silikonstabilisators (OS 15 der Bayer AG), 0,25 Teilen einer 3%igen Lösung von Diazabicyclooctan in Dipropylenglykol, 0,15 Teilen Zinn-(II)-octoat und 3,8 Teilen Wasser intensiv vermischt.

Die Steigzeit des Reaktionsgemisches beträgt 83 Sekunden, die Abbindezeit 90 Sekunden. Der erhaltene Schaumstoff ist offenporig und frei von Störungen. Er weist folgende Eigenschaften auf:

Rohdichte (kg/m³) 30
Zugfestigkeit (kPa) 158
Bruchdehnung (%) 194

Stauchhärte bei 40% (kPa) 5,65
Druckverformungsrest bei 90% (%) 9,2
Nach dem Fordtest betrug die Stauchhärte noch 4,52 kPa und der Druckverformungsrest 10,3%.

Beispiel 8

100 Teile der Dispersion aus Beispiel 7a) wurden mit 31,4 Teilen Diisocyanatotoluol (2,4-/2,6-Isomerenverhältnis: 72 zu 28), 1,0 Teilen eines handelsüblichen Silikonstabilisators (OS 15 der Bayer AG), 0,15 Teilen einer 3%igen Lösung von Diazabicyclooctan in Dipropylenglykol, 0,4 Teilen Dimethylethanolamin, 0,1 Teil Zinn(II)-octoat und 2,2 Teilen Wasser intensiv vermischt.

Die Steigzeit des Reaktionsgemisches beträgt 125 Sekunden, die Abbindezeit 80 Sekunden. An dem erhaltenen offenporigen und störungsfreien Schaumstoff wurden die folgenden mechanischen Eigenschaftswerte bestimmt:

Rohdichte ($kg/m^3$) 48,5
Zugfestigkeit (kPa) 209
Bruchdehnung (%) 262
Stauchhärte bei 40% (kPa) 6,95
Druckverformungsrest bei 90% (%) 5,7

Nach dem Fordtest betrug die Stauchhärte bei 40% noch 5,56 kPa und der Druckverformungsrest bei 90% 6,8%.

Beispiel 9

a) Herstellung der Dispersion

Aus 200 g eines Copolyetheresters, welcher durch Umsetzung von 1,4-Butandiol, Dimethylterephthalat und Polytetrahydrofuran (MG 1000) gemäss DE-OS 2 706 297 hergestellt worden ist, der Polyether- und Terephthalatsequenzen im Gewichtsverhältnis von ca. 1:1 enthält, ein mittleres Molekulargewicht von 7100 und einen Schmelzpunkt von 160 °C aufweist, und 1300 g eines trifunktionellen Polyethers aus Propylenoxid und Ethylenoxid (Molekulargewicht 3000) wird analog zu Beispiel 1a durch Erwärmen auf 185 °C und Abkühlen (unter Rühren) eine Dispersion hergestellt. (Teilchengrösse: 75% zwischen 0,1 und 1,6 µm).

b) Herstellung eines Schaumstoffes

Es wird analog zu Beispiel 1b verfahren; der erhaltene Schaum besitzt folgende Eigenschaften:

| | | |
|---|---|---|
| Rohdichte: | 33 $kg/m^3$ | (DIN 53 577) |
| Zugfestigkeit: | 161 kPa | (DIN 53 571) |
| Dehnung: | 95% | (DIN 53 571) |
| Druckspannung (bei 40% Verformung) | 6,7 kPa | (DIN 53 577) |

Beispiel 10

Es wird wie in Beispiel 9 verfahren; als in der Polyolkomponente dispergierte Phase wird jedoch ein Copolyetherester, der aus Butylenterephthalat- und Polypropylenoxidsequenzen vom Molekulargewicht 1000 (Gewichtsverhältnis 55:45) aufgebaut ist, ein mittleres Molekulargewicht von 8500 und einen Schmelzpunkt von 170 °C aufweist, verwendet.

Der erhaltene Schaum besitzt folgende Eigenschaften:

| | | |
|---|---|---|
| Rohdichte: | 32 $kg/m^3$ | (DIN 53 577) |
| Zugfestigkeit: | 155 kPa | (DIN 53 571) |
| Dehnung: | 88% | (DIN 53 571) |
| Druckspannung (bei 40% Verformung) | 6,3 kPa | (DIN 53 577) |

Beispiel 11

Herstellung eines warmverformbaren Polyurethanschaumstoffs

An warmverformbare Schaumstoffe wird die Forderung gestellt, dass sie in aufgeheiztem Zustand (ca. 180 bis 200 °C) gut verformbar sind, so dass Details der Form möglichst konturgetreu abgebildet werden; anderseits muss das fertige Formteil jedoch eine möglichst hohe Wärmebeständigkeit aufweisen. Wie die folgenden Versuche zeigen, bewirkt die Verwendung der erfindungsgemässen Polyesterdispersionen in üblichen Formulierungen von warmverformbaren Polyurethanschaumstoffen eine deutliche Erhöhung der Konturstabilität des fertigen Formteils.

a) Vergleichsversuch

100 Gew.-Teile eines Anlagerungsprodukts von Propylenoxid an Trimethylolpropan (OH-Zahl: 550),

1,5 Teile Na-Rizinusölsulfonat,
1,5 Teile Wasser
2 Teile Dimethylcyclohexylamin
15 Teile Trichlormonofluormethan und
202 Teile eines Prepolymeren aus einem technischen Polymethylenpolyphenylenisocyanat mit einem Gehalt von 90% Diphenylmethandiisocyanat und einem Gemisch von Tri- und Tetrapropylenglykol (OH-Zahl: 500), wobei der NCO-Gehalt des Prepolymeren 25% beträgt, werden intensiv miteinander vermischt und das Reaktionsgemisch wird in einer offenen Form aufschäumen gelassen.

Der erhaltene Schaumstoff weist eine Rohdichte von ca. 50 $kg/m^3$ auf. Dieser wird für die Weiterverarbeitung in 20 mm dicke Platten aufgeschnitten, welche man zwischen Kontaktheizplatten, die eine Temperatur von 190 °C aufweisen, 4 Minuten lang erhitzt und dann möglichst rasch in eine Prägeform transportiert. Die Prägeform wird unter Anwendung von Druck (ca. 8 bar) geschlossen und der Schaumstoff entsprechend den Konturen der Form verstreckt und verpresst.

Zur Prüfung der Konturstabilität wird das fertige Formteil 24 h nach der Herstellung 1 Stunde lang in einem Heizkanal gelagert. Die Temperatur, bei welcher gerade noch keine Veränderungen der Konturen des Formteils beobachtet werden können, gilt als Grenztemperatur, bis zu der das Formteil konturstabil ist. Bei den nach der oben angegebenen Rezeptur erhaltenen Schaumstoff-Formteilen misst man eine Grenztemperatur von 90 °C.

b) Erfindungsgemässes Verfahren

Wiederholt man Versuch a), setzt jedoch als Polyolkomponente 107 Teile einer Dispersion von 7 Teilen Polyhexamethylenterephthalat (Schmelzpunkt: 120 °C) in 100 Teilen des propoxylierten Trimethylolpropans ein, welche in analoger Weise zu Beispiel 1 hergestellt worden ist, so erhält man bei sonst gleicher Rezeptur einen Formschaumstoff, bei welchem die Grenztemperatur der Konturstabilität 110 °C beträgt.

## Patentansprüche

1. Verfahren zur Herstellung von feinteiligen, redispergierbaren Dispersionen von organischen Füllstoffen in niedrig schmelzenden Polyhydroxylverbindungen, dadurch gekennzeichnet, dass man

a) 1–40 Gew.-%, bezogen auf die gesamte Dispersion, eines Polyesters, Polyesteramids oder segmentierten Copolyetheresters mit einem Schmelzpunkt zwischen 110 und 280 °C und Molekulargewichten zwischen 254 und 50 000, und

b) 99–60 Gew.-%, bezogen auf die gesamte Dispersion, einer Polyhydroxylverbindung mit einem Schmelzpunkt unter 50 °C, in welcher die dispergierte Komponente a) im wesentlichen unlöslich ist, bei einer Temperatur oberhalb des Schmelzpunktes von Komponente a) unter starkem Rühren intensiv miteinander vermischt und das Gemisch unter weiterem intensivem Rühren unter den Schmelzpunkt von Komponente a) abkühlt, oder dass man die Komponente a) in einem Lösungsmittel löst und, gegebenenfalls portionsweise, mit der – gegebenenfalls in einem Lösungsmittel gelösten – Komponente b) gut vermischt und gleichzeitig und/oder anschliessend das bzw. die Lösungsmittel unter starkem Rühren, gegebenenfalls im Vakuum abdestilliert, wobei mehr als 50 Gew.-% der dispergierten Phase a) in einer Teilchengrösse von 0,05 bis 10 µm in der kontinuierlichen Phase b) vorliegen.

2. Verfahren nach Anspruch 1, dadurch gekennzeichnet, dass man als Substanz a) Polyester aus Diolen und Dicarbonsäuren, Polyesteramide oder segmentierte Copolyetherester, die hochschmelzende Polyestersegmente aufweisen, welche durch Äther- oder Polyäthersegmente miteinander verbunden sind, einsetzt.

3. Verfahren nach Ansprüchen 1 und 2, dadurch gekennzeichnet, dass a) 5–25 Gew.-%, bezogen auf die gesamte Dispersion, eines Polyesters, Polyesteramids oder segmentierten Copolyetheresters mit einem Schmelzpunkt zwischen 110 und 220 °C, mit durchschnittlich 2 bis 4 Hydroxylgruppen, die gegebenenfalls ganz oder teilweise durch Reaktion mit Isocyanaten verschlossen sind, und einem Molekulargewicht von 300 bis 25 000 und b) 95–75 Gew.-%, bezogen auf die gesamte Dispersion der Polyole, verwendet werden.

4. Verfahren nach Ansprüchen 1–3, dadurch gekennzeichnet, dass man als Substanz a) Polyester einsetzt, wo die Säurekomponente oder die Diolkomponente oder anteilsweise beide aromatische oder cycloaliphatische Gruppen enthalten.

5. Verfahren nach Ansprüchen 1–4, dadurch gekennzeichnet, dass man Polyester auf Basis von Terephthalsäure und 1,4-Butandiol und/oder Hexandiol und/oder Äthylenglykol einsetzt.

6. Verfahren nach Ansprüchen 1–5, dadurch gekennzeichnet, dass man als kontinuierliche Phase b) ein Polyetherpolyol mit 2–4 Hydroxylgruppen und einem Molekulargewicht zwischen 400 und 10 000 einsetzt.

7. Verfahren nach Ansprüchen 1–5, dadurch gekennzeichnet, dass man als kontinuierliche Phase b) Polyole mit einem Molekulargewicht von 62 bis 400 einsetzt.

8. Nach dem Schmelz- oder Lösungsmittel-Dispergierverfahren entsprechend Ansprüchen 1–7 hergestellte feinteilige, redispergierbare Dispersionen.

9. Redispergierbare Dispersionen nach Anspruch 8, dadurch gekennzeichnet, dass mehr als 75 Gew.-% der dispergierten Phase a) in einer Teilchengrösse von 0,1 bis 4 µm vorliegen.

10. Verfahren zur Herstellung von gegebenenfalls zellförmigen Polyurethankunststoffen durch Umsetzung von

A) Polyisocyanaten mit

B) organische Füllstoffe enthaltenden höhermolekularen Polyhydroxylverbindungen sowie gegebenenfalls

C) weiteren gegenüber Isocyanaten reaktionsfähigen Gruppen aufweisenden Verbindungen, gegebenenfalls in Gegenwart von

D) Treibmitteln, Aktivatoren und sonstigen an sich bekannten Zusatzstoffen, dadurch gekennzeichnet, dass man als Komponente B) die nach Ansprüchen 1–7 hergestellten Dispersionen einsetzt und dass die Temperatur des Reaktionsansatzes aus den Komponenten unterhalb der Schmelztemperatur des in Komponente B) dispergierten organischen Füllstoffs gehalten wird.

## Claims

1. Process for the preparation of finely divided, redispersible dispersions of organic fillers in low melting polyhydroxyl compounds, characterised in that

a) 1–40% by weight, based on the whole dispersion, of a polyester, polyester amide or segmented copolyether ester having a melting point between 110 and 280 °C and molecular weights between 254 and 50, 000, and

b) 99–60% by weight, based on the whole dispersion, of a polyhydroxyl compound having melting point below 50 °C, in which the dispersed component a) is substantially insoluble, are intensively mixed with one another with vigorous stirring at a temperature above the melting point of component a) and the mixture is cooled below the melting point of component a) with continued intensive stirring, or in that component a) is dissolved in a solvent and is well mixed, optionally portionwise with component b) – which is optionally dissolved in a solvent – and the solvent or

solvents is or are distilled off at the same time and/or subsequently with vigorous stirring, optionally under vacuum, more than 50% by weight of the dispersed phase a) being present in a particle size of 0.05 to 10 µm in the continuous phase b).

2. Process according to Claim 1, characterised in that polyesters of diols and dicarboxylic acids, polyester amides or segmented copolyether esters, which contain high melting polyester segments, which are linked together by ether or polyether segments, are used as the substance a).

3. Process according to Claims 1 and 2, characterised in that

a) 5–25% by weight, based on the whole dispersion, of a polyester, polyester amide or segmented copolyether ester having a melting point between 110 and 220 °C and having an average of 2 to 4 hydroxyl groups which may be partly or completely blocked by a reaction with isocyanates, and having a molecular weight of 300 to 25, 000, and

b) 95–75% by weight, based on the whole dispersion, of the polyols, are used.

4. Process according to Claims 1–3, characterised in that as substance a) polyesters are used in which the acid component or the diol component or portions of both contain aromatic or cycloaliphatic groups.

5. Process according to Claims 1–4, characterised in that polyesters based on terephthalic acid and 1,4-butanediol and/or hexanediol and/or ethylene glycol are used.

6. Process according to Claims 1–5, characterised in that a polyether polyol having 2–4 hydroxyl groups and a molecular weight between 400 and 10, 000 is used as the continuous phase b).

7. Process according to Claims 1–5, characterised in that polyols having a molecular weight of 62 to 400 are used as the continuous phase b).

8. Finely divided redispersible dispersions prepared by the solvent-free or solvent dispersion process according to Claims 1–7.

9. Redispersible dispersions according to Claim 8, characterised in that more than 75% by weight of the dispersed phase a) have a particle size of 0.1 to 4 µm.

10. Process for the preparation of optionally cellular polyurethane plastics by reacting

A) polyisocyanates with

B) relatively high molecular weight polyhydroxyl compounds containing organic fillers and optionally

C) other compounds having isocyanate reactive groups, optionally in the presence of

D) blowing agents, activators and other known additives, characterised in that the dispersions prepared according to Claims 1–7 are used as component B) and in that the temperature of the reaction mixture of the components is maintained below the melting point of the organic filler dispersed in component B).

**Revendications**

1. Procédé de préparation de dispersions finement divisées et redispersables de charges organiques dans des composés polyhydroxy à bas point de fusion, caractérisé en ce que, tout en agitant vigoureusement, on mélange intensivement l'un avec l'autre:

a) 1–40% en poids (calculé sur la dispersion globale) d'un polyester, d'un polyesteramide ou d'un copolyéther-ester segmenté ayant un point de fusion compris entre 110 et 280 °C et des poids moléculaires se situant entre 254 et 50 000, et

b) 99–60% en poids (calculé sur la dispersion globale) d'un composé polyhydroxy ayant un point de fusion inférieur à 50 °C dans lequel le composant dispersé (a) est essentiellement insoluble, à une température supérieure au point de fusion du composant (a), et, tout en continuant à agiter vigoureusement, on refroidit le mélange à une température inférieure au point de fusion du composant (a), ou on dissout le composant (a) dans un solvant et on le mélange convenablement, éventuellement par portions, avec le composant (b) éventuellement dissous dans un solvant et, simultanément et/ou ultérieurement, on sépare le ou les solvants par distillation, éventuellement sous vide, tout en agitant vigoureusement, plus de 50% en poids de la phase dispersée (a) se présentant en particules d'une granularité de 0,05 à 10 µm dans la phase continue (b).

2. Procédé suivant la revendication 1, caractérisé en ce que, comme substance (a), on utilise des polyesters de diols et d'acides dicarboxyliques, des polyesteramides ou des copolyéthers-esters segmentés comportant des segments polyester d'un point de fusion élevé qui sont reliés l'un à l'autre par des segments éther ou polyéther.

3. Procédé suivant les revendications 1 et 2, caractérisé en ce qu'on utilise:

a) 5 à 25% en poids (calculé sur la dispersion globale) d'un polyester, d'un polyesteramide ou d'un copolyéther-ester segmenté ayant un point de fusion se situant entre 110 et 220 °C avec, en moyenne, deux à quatre groupes hydroxy qui sont éventuellement fermés entièrement ou partiellement par réaction avec des isocyanates, ainsi qu'un poids moléculaire de 300 à 25 000, et

b) 95–75% en poids (calculé sur la dispersion globale) de polyols.

4. Procédé suivant les revendications 1 à 3, caractérisé en ce que, comme substance (a), on utilise des polyesters dans lesquels le composant acide ou le composant diol ou encore partiellement les deux contiennent des groupes aromatiques ou cycloaliphatiques.

5. Procédé suivant les revendications 1 à 4, caractérisé en ce qu'on utilise des polyesters à base d'acide téréphtalique et de 1,4-butane-diol et/ou d'hexane-diol et/ou d'éthylène-glycol.

6. Procédé suivant les revendications 1 à 5, caractérisé en ce que, comme phase continue (b), on utilise un polyéther-polyol contenant 2 à 4 groupes hydroxy et ayant un poids moléculaire se situant entre 400 et 10 000.

7. Procédé suivant les revendications 1 à 5, caractérisé en ce que, comme phase continue (b), on utilise des polyols ayant un poids moléculaire de 62 à 400.

8. Dispersions finement divisées et redispersables préparées selon le procédé de dispersion par fusion ou dans un solvant conformément aux revendications 1–7.

9. Dispersions redispersables suivant la revendication 8, caractérisées en ce que plus de 75% en poids de la phase dispersée (a) se présentent sous forme de particules d'une granularité de 0,1 à 4 µm.

10. Procédé de préparation de matières synthétiques de polyuréthanes éventuellement cellulaires par réaction:

A) des polyisocyanates avec

B) des composés polyhydroxy de poids moléculaire très élevé contenant des charges organiques, ainsi qu'éventuellement

C) d'autres composés comportant des groupes réactifs vis-à-vis des isocyanates, éventuellement en présence

D) d'agents moussants, d'activateurs et d'autres additifs connus en soi, caractérisés en ce que, comme composant (B), on utilise les dispersions préparées suivant les revendications 1 à 7 et l'on maintient la température de la charge réactionnelle constituée des composants en dessous de la température de fusion de la charge organique dispersée dans le composant (B).